# EUROPÄISCHE PATENTANMELDUNG

(11) **EP 2 093 587 A2**
(43) Veröffentlichungstag der Anmeldung: **26.08.2009**
(21) Anmeldenummer: 09153612.8
(22) Anmeldetag: 25.02.2009
(51) Int. Cl.: G01S 7/02, G01S 13/90, G01S 7/03

(54) **Dual-Frequenzband Dual-Polarisations-SAR**

(30) Priorität: 25.02.2008 DE 102008010772
(71) Anmelder: RST Raumfahrt Systemtechnik GmbH, 88682 Salem (DE)
(72) Erfinder: Braun, Hans Martin, Prof. Dr.-Ing., 88682 Salem (DE)
(74) Vertreter: Michalski Hüttermann & Partner Patentanwälte

(57) **Zusammenfassung**

Die Erfindung betrifft ein Radargerät mit synthetischer Apertur, mit einer ersten Sende- und Empfangseinheit zum Senden und zum Empfangen eines ersten Frequenzbandes und einer zweiten Sende- und Empfangseinheit zum Senden und zum Empfangen eines zweiten Frequenzbandes. Erfindungsgemäß sind das erste Frequenzband und das zweite Frequenzband jeweils als polarisiertes Frequenzband vorgesehen und eine polarisierte Antenneneinheit ist zum Zusammenführen des ersten polarisierten Frequenzbandes und des zweiten polarisierten Frequenzbandes vorgesehen. Das erfindungsgemäße Radargerät mit synthetischer Apertur sowie das erfindungsgemäße Verfahren zum Betrieb eines Radargeräts mit synthetischer Apertur haben den Vorteil, dass eine verbesserte Auflösung ermöglicht wird.

## Beschreibung

Die Erfindung betrifft ein Radargerät mit synthetischer Apertur, mit einer ersten Sende- und Empfangseinheit zum Senden und zum Empfangen eines ersten Frequenzbandes und einer zweiten Sende- und Empfangseinheit zum Senden und zum Empfangen eines zweiten Frequenzbandes, sowie ein Verfahren zum Betrieb eines Radargeräts mit synthetischer Apertur, wobei ein erstes Frequenzband gesendet und empfangen wird und ein zweites Frequenzband gesendet und empfangen wird.

Radargeräte mit synthetischer Apertur, abgekürzt als SAR für Synthetic Aperture Radar, haben in verschiedenen Anwendungsbereichen, wie in Flugzeugen oder Satelliten, eine große Bedeutung und dienen z.B. zur Erderkundung, Kartierung oder Aufklärung. Die von einem SAR erzeugten Abbildungen sind aufgrund ihrer Ähnlichkeit mit fotografischen Aufnahmen einfach interpretierbar. SAR arbeitet unabhängig von den Beleuchtungsverhältnissen.

In einem SAR wird die Auflösung in Flugrichtung über die Integrationszeit erreicht. Hierfür gibt es kaum eine realistische Grenze, d.h. die in nächster Zukunft erforderlichen Werte sind mit den aus dem Stand der Technik bekannten Mitteln erreichbar. Die geometrische Auflösung in Entfernungsrichtung (bei der SAR Geometrie quer zur Flugrichtung) hängt von der Hochfrequenzbandbreite des Sendesignals ab.

Aus dem Stand der Technik sind verschiedene Realisierungen von SAR bekannt. Grundsätzlich weist ein typisches Radar einen Sender, einen Empfänger, einen Zirkulator und eine Antenne auf. Der Sender sendet ein Signal, insbesondere ein Frequenzband, über die Antenne aus. Das von Objekten reflektierte Echo des Signals wird über die Antenne durch den Empfänger empfangen. Der Zirkulator trennt das ausgesandte Signal von dem empfangenen Signal.

Bei den aus dem Stand der Technik bekannten Konstruktionen eines SARs ist die erforderliche Bandbreite des Signals umgekehrt proportional zur Auflösung. Je kleiner die Auflösungszelle also gefordert ist, desto höher muss die Bandbreite sein. Insbesondere in der Raumfahrt, aber auch bei flugzeuggetragnenen SARs, ist die Auflösung aufgrund der erforderlichen Bandbreite technologisch begrenzt.

Es ist Aufgabe der Erfindung, ein Radargerät mit synthetischer Apertur sowie ein Verfahren zum Betrieb eines Radargeräts mit synthetischer Apertur anzugeben, die eine verbesserte Auflösung ermöglichen.

Ausgehend von dem eingangs beschriebenen Radargerät mit synthetischer Apertur wird dies dadurch erreicht, dass das erste Frequenzband und das zweite Frequenzband jeweils als polarisiertes Frequenzband vorgesehen sind und eine polarisierte Antenneneinheit zum Zusammenführen des ersten polarisierten Frequenzbandes und des zweiten polarisierten Frequenzbandes vorgesehen ist. Die Erfindung sieht damit ein Zusammenführen der beiden polarisierten Frequenzbänder derart über eine polarisierte Antenneneinheit vor, dass eine größere Bandbreite ermöglicht wird, die zu einer verbesserten Auflösung führt. Die empfangenen und zusammengeführten polarisierten Frequenzbänder sind in einem Radargerät mit synthetischer Apertur darstellbar. Vorzugsweise weisen die beiden Frequenzbänder unterschiedliche Polarisationen auf. Es ist ferner bevorzugt, dass die Antenneneinheit mit beiden polarisierten Frequenzbändern das gleiche Zielgebiet ausleuchtet. Somit ist eine Verbesserung der Auflösung in Entfernungsrichtung erreichbar, wobei im Anschluss daran innerhalb der Azimutkompression die volle benötigte Auflösung in Flugrichtung prozessierbar ist.

Vorzugsweise grenzen beide polarisierte Frequenzbänder eng aneinander. Ganz besonders bevorzugt besteht kein Zwischenraum zwischen den beiden polarisierten Frequenzbändern. Eine bevorzugte Weiterbildung der Erfindung liegt außerdem darin, dass beide Sende- und Empfangseinheiten je einen Sender zum Senden des jeweiligen polarisierten Frequenzbandes, je einen Empfänger zum Empfangen des jeweiligen polarisierten Frequenzbandes sowie je einem Zirkulator zum Umschalten des jeweiligen polarisierten Frequenzbandes zwischen dem Sender und dem Empfänger aufweisen. Das bedeutet, dass jedes Frequenzband möglichst lange in einem separaten Frequenzband geführt wird, wodurch die Behandlung der Breitbandigkeit erleichtert wird. Vorzugsweise werden die beiden Frequenzbänder zeitgleich gesendet und empfangen.

Grundsätzlich können die erste und die zweite Sende- und Empfangseinheit derart ausgestaltet sein, dass beide Frequenzbänder linear polarisiert gesendet werden. Gemäß einer bevorzugten Weiterbildung der Erfindung ist jedoch vorgesehen, dass die erste Sende- und Empfangseinheit derart ausgestaltet ist, dass das erste polarisierte Frequenzband linkszirkular bzw. rechtszirkular gesendet wird und die zweite Sende- und Empfangseinheit derart ausgestaltet ist, dass das zweite polarisierte Frequenzband rechtszirkular bzw. linkszirkular gesendet wird. Mit anderen Worten ist der erste Sender demgemäß derart ausgestaltet, dass das erste Frequenzband linkszirkular polarisiert gesendet wird, und der zweite Sender ist derart ausgestaltet, dass das zweite Frequenzband rechtszirkular gesendet wird, oder der erste Sender ist derart ausgestaltet, dass das erste Frequenzband rechtszirkular gesendet wird, und der zweite Sender ist derart ausgestaltet, dass das zweite Frequenzband linkszirkular gesendet wird.

Ganz besonders ist bevorzugt, dass die polarisierte Antenneneinheit als zirkularpolarisierte Antenne ausgeführt ist. Dabei kann eine Zirkulationsweiche vorgesehen sein, die ein empfangenes Echo über den jeweiligen Zirkulator, der nur das jeweils eine Frequenzband bedient, an den jeweiligen Empfänger leitet. Die Auflösung eines SARs, insbesondere bei komplexen Zielen, welche z.B. aus Flächen aber aus Linien bestehen, wird bei zirkularer Polarisation im Gegensatz zu linearer Polarisation verbessert.

Weiterhin ist es bevorzugt, dass die polarisierte Antenneneinheit als Reflektorantenne mit einem Zirkular-Polarisator ausgeführt ist, wobei die Reflektorantenne ein Erregerhorn aufweist und der Zirkular-Polarisator, insbesondere ein Polarisationsfilter, am Eingang zum Erregerhorn angeordnet ist. Dabei kann die Reflektorantenne als Parabolantenne ausgeführt sein, bei der ein metallischer Rotationsparaboloid den Reflektor bildet. Durch diesen kann die Richtcharakteristik der Parabolantenne und damit die Richtwirkung der Parabolantenne wesentlich beeinflusst werden.

Eine bevorzugte Weiterbildung der polarisierten Antenneneinheit liegt ferner darin, dass die polarisierte Antenneneinheit als Phased-Array-Antenne mit einem zirkularpolarisierten Strahlerelement ausgeführt ist. Dabei kann vorgesehen sein, dass je ein Eingang bzw. ein Ausgang für je eine Polarisationsrichtung, also linkszirkular oder rechtszirkular, ausgestaltet ist. Vorzugsweise ist ein Polarisationsfilter vor der Abstrahlfläche eines Moduls der Phased-Array-Antenne angeordnet.

Ganz besonders ist bevorzugt, dass vor dem Empfänger ein Eingangsfilter zur Filterung von Signalanteilen des jeweils anderen Frequenzbandes vorgesehen ist. Insbesondere kann der Eingangsfilter derart ausgestaltet sein, dass übergekoppelte Signalanteile des jeweils anderen Frequenzbandes ausgefiltert oder annähernd vollständig ausgefiltert werden. Dadurch kann erreicht werden, dass dem jeweiligen Empfänger nur oder annähernd nur die Signalanteile zugehen, die dem jeweiligen Frequenzband entsprechen.

Gemäß einer Weiterbildung der Erfindung ist bevorzugt, dass vor dem Empfänger ein steilflankiger Filter zur Zerlegung des jeweiligen polarisierten Frequenzbandes in weitere polarisierte Frequenzbänder vorgesehen ist. Bevorzugt ist der steilflankige Filter vor dem vorab erwähnten Eingangsfilter angeordnet. Eine Zerlegung des jeweiligen polarisierten Frequenzbandes in weitere polarisierte Frequenzbänder ist insbesondere dann bevorzugt, wenn der Empfänger das nicht-zerlegte polarisierte Frequenzband nicht als Ganzes empfangen kann. In einem solchen Fall können weitere Empfänger vorgesehen sein, wobei jeder weitere Empfänger zum Empfang eines weiteren, zerlegten Frequenzbands vorgesehen sein kann.

Gemäß einer bevorzugten Ausführungsform der Erfindung ist vorgesehen, dass das Radargerät eine Einrichtung zur Phasenkorrektur des empfangenen polarisierten Frequenzbandes und mindestens eine Einrichtung zur SAR-Prozessierung des phasenkorrigierten polarisierten Frequenzbandes aufweist. Insbesondere kann vorgesehen sein, dass mindestens zwei Einrichtungen zur SAR-Prozessierung mit einer Einrichtung zur Phasenkorrektur vorgesehen sind. Vorzugsweise ist die Einrichtung zur Phasenkorrektur der Einrichtung zur SAR-Prozessierung vorgeschaltet.

Ausgehend von dem eingangs beschriebenen Verfahren zum Betrieb eines Radargeräts mit synthetischer Apertur ist die weiter oben genannte Aufgabe dadurch gelöst, dass das erste Frequenzband und das zweite Frequenzband jeweils polarisiert gesendet und/oder empfangen werden und die empfangenen Echos des ersten polarisierten Frequenzbandes und des zweiten polarisierten Frequenzbandes kombiniert werden.

Grundsätzlich können beide Frequenzbänder linear polarisiert gesendet werden. Gemäß einer bevorzugten Weiterbildung der Erfindung ist jedoch vorgesehen, dass das erste polarisierte Frequenzband linkszirkular bzw. rechtszirkular gesendet wird und das zweite polarisierte Frequenzband rechtszirkular bzw. linkszirkular gesendet wird. Mit anderen Worten wird das erste Frequenzband linkszirkular polarisiert gesendet und das zweite Frequenzband wird rechtszirkular gesendet oder das erste Frequenzband wird rechtszirkular gesendet und das zweite Frequenzband wird linkszirkular gesendet.

Eine bevorzugte Weiterbildung des Verfahrens liegt darin, dass vor dem Empfangen des einen polarisierten Frequenzbandes Signalanteile des jeweils anderen polarisierten Frequenzbandes gefiltert werden. Insbesondere kann die Filterung derart erfolgen, dass übergekoppelte Signalanteile des jeweils anderen Frequenzbandes ausgefiltert oder annähernd vollständig ausgefiltert werden

Weiterhin ist es bevorzugt, dass vor dem Empfangen das jeweilige polarisierte Frequenzband in weitere polarisierte Frequenzbänder zerlegt wird. Vorzugsweise erfolgt die Zerlegung in weitere polarisierte Frequenzbänder durch eine Filterung, insbesondere durch eine steilflankige Filterung. Ganz besonders bevorzugt erfolgt eine derartig Zerlegung in weitere polarisierte Frequenzbänder bevor, wie vorab erwähnt, Signalanteile des jeweils anderen polarisierten Frequenzbandes gefiltert werden.

Ganz besonders ist bevorzugt, dass die empfangenen Echos des ersten polarisierten Frequenzbandes und des zweiten polarisierten Frequenzbandes in einem SAR-Prozessing kombiniert werden, dass die Echos von Zielen, die sich für beide Polarisationen leistungs- und phasenmäßig gleich oder ähnlich verhalten, eine Auflösung ergeben, die aus der Summenbandbreite der beiden polarisierten Frequenzbänder resultiert.

Weiterhin ist es bevorzugt, dass die Kombination der empfangen Echos derart erfolgt, dass das Ergebnis in Bildern mit zwei oder mehr unterschiedlichen Linearkombinationen darstellbar ist. Dadurch wird es z.B. ermöglicht, lineare von flächenhaften Zielstrukturen zu unterscheiden.

Grundsätzlich können die beiden Frequenzbänder gleichzeitig gesendet werden. Ganz besonders ist es jedoch bevorzugt, dass die polarisierten Frequenzbänder sequenziell abwechselnd gesendet werden, der Empfang in der Summenbandbreite der polarisierten Frequenzbänder erfolgt und die Kombination der empfangen Echos polarimetrisch auswertbar ist. Vorzugsweise wird hierzu in einem ersten Pulswiederholintervall das erste Frequenzband mit Kopolar- und Kreuzkopolarkomponente empfangen und in einem zweiten Pulswiederholintervall das zweite Frequenzband mit Kopolar- und Kreuzkopolarkomponente empfangen.

Andere bevorzugte Weiterbildungen dieses Verfahrens ergeben sich in Analogie zu den zuvor beschriebenen bevorzugten Weiterbildungen des erfindungsgemäßen Radargeräts.

Das zuvor beschriebene Radargerät bzw. das Verfahren zum Betrieb eines Radargeräts findet vorzugsweise Anwendung bei Flugzeugen oder Satelliten und dient z.B. zur Erderkundung, Kartierung oder Aufklärung. Weitere Anwendungsgebiete liegen in der land-, see- oder flugzeuggestützten Aufklärung.

Nachfolgend wird die Erfindung anhand bevorzugter Ausführungsbeispiele unter Bezugnahme auf die Zeichnung im Detail beschrieben. In der Zeichnung zeigen:
- Fig. 1: eine schematische Darstellung mit den wesentlichen Funktionsblöcken des Radargeräts gemäß einem ersten bevorzugten Ausführungsbeispiel der Erfindung,
- Fig. 2: eine schematische Darstellung mit den wesentlichen Funktionsblöcken des Radargeräts gemäß einem zweiten bevorzugten Ausführungsbeispiel der Erfindung und

- Fig. 3: eine schematische Darstellung mit den wesentlichen Funktionsblöcken des Radargeräts gemäß einem dritten bevorzugten Ausführungsbeispiel der Erfindung.

Wie schon zuvor angedeutet, wird in einem Synthetik Apertur Radar (SAR) die Auflösung in Flugrichtung über die Integrationszeit erreicht. Hierfür gibt es kaum eine realistische Grenze, d.h. die in nächster Zukunft erforderlichen Werte sind mit den aus dem Stand der Technik bekannten Mitteln erreichbar. Die geometrische Auflösung in Entfernungsrichtung (bei der SAR Geometrie quer zur Flugrichtung) hängt an der Hochfrequenzbandbreite des Sendesignals. Je kleiner die Auflösungszelle gefordert ist, desto höher muss die Bandbreite sein.

Die aus dem Stand der Technik bekannten SARe stoßen hierbei an die Grenzen der Realisierbarkeit in den Hochfrequenzbaugruppen, insbesondere im Bereich von Leistungsverstärkern. Der Versuch, die Bandbreite auf zwei Leistungsverstärker aufzuteilen scheitert bei den aus dem Stand der Technik bekannten Systemen daran, dass ein SAR Sensor sein Signal von einer Antenne mit einem definierten Phasenzentrum absenden muss. Zwar sind aus dem Stand der Technik Systeme mit verschiedenen Phasenzentren beschrieben, wie zum Beispiel Arrayantennen mit mehreren Modulen; diese arbeiten aber alle mit den gleichen exakt parallel laufenden Sendesignalen, wodurch sich ein gemeinsames Phasenzentrum im Zentrum der Antenne einstellt. Dieser Betrieb erlaubt es nicht, verschiedene Signale auf verschiedene Module aufzuteilen und diese dann gemeinsam zur Bildung der synthetischen Apertur zu verwenden. Es sind ferner auch Komponenten zur Zusammenführung mehrerer Kanäle ("Magisches T") bekannt, aber auch diese Ausgestaltungen verlangen einen hohen Übereinstimmungsgrad der Signale der zu kombinierenden Kanäle.

Die vorliegende Erfindung nutzt die Eigenschaft von Zielen aus, zirkularpolarisierte Signale, unabhängig ob linkszirkular oder rechtszirkular, mit gleichen Amplituden und gleichen Phasen als Echos zurückzusenden. Dies gilt sowohl für flächenhafte, als auch für linienhafte Ziele, wobei sich die Reflexionseigenschaften nur durch die Transformation von linkszirkular in rechtszirkular (und umgekehrt) unterscheiden, aber nicht durch Betrag und Phase der Reflexion. Diese wird ausgenützt, indem man ein Frequenzband mit der einen Zirkularpolarisation sendet und empfängt, das andere Frequenzband mit der anderen Polarisation. Bei subsequentem Betrieb der Kanäle mit Wechsel von Puls zu Puls, können auch die Kreuzpolarisationskomponenten ausgewertet werden, was erlaubt zwischen Einfach- und Zweifachreflexionen zu unterscheiden.

Dabei werden die Signale koherent, d.h. von einem gemeinsamen Mutteroszilator abgeleitet erzeugt. Die Echos werden im Empfänger getrennt aber koherent ins Basisband umgesetzt und dann zusammengeführt. Danach erfolgt die gemeinsame Pulskompression. Es ist auch möglich, die Pulskompression der zwei Kanäle separat aber koherent durchzuführen und die komprimierten Echos danach komplex zu addieren.

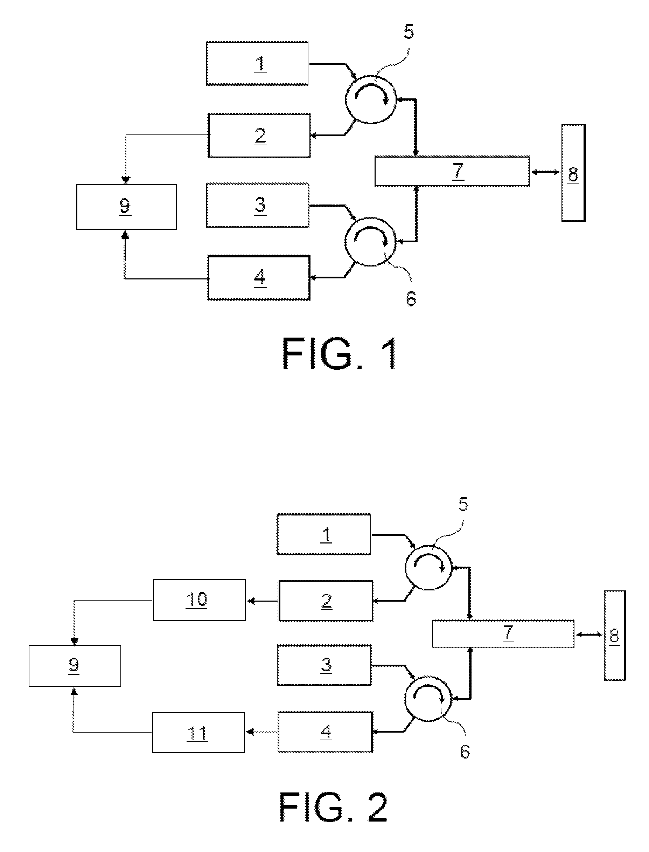

Aus den Figuren 1 bis 3 ist jeweils eine schematische Darstellung eines Radargeräts mit synthetischer Apertur gemäß einem bevorzugten Ausführungsbeispiel der Erfindung ersichtlich. Ein solches Radargerät dient zur zweidimensionalen Darstellung eines Geländeausschnitts durch Abtastung der Erdoberfläche und weist einen ersten Sender 1, einen ersten Empfänger 2, einen zweiten Sender 3 und einen zweiten Empfänger 4 auf.

Der erste Sender 1 sendet ein linkszirkular bzw. rechtszirkular polarisiertes erstes Frequenzband, welches durch den ersten Empfänger 2 empfangen wird. Ein erster Zirkulator 5 ist zum Umschalten des ersten polarisierten Frequenzbandes zwischen dem ersten Sender 1 und dem ersten Empfänger 2 vorgesehen. Der zweite Sender 3 sendet ein rechtszirkular bzw. linkszirkular polarisiertes zweites Frequenzband, welches durch den zweiten Empfänger 4 empfangen wird. Ein zweiter Zirkulator 6 ist zum Umschalten des zweiten polarisierten Frequenzbandes zwischen dem zweiten Sender 3 und dem zweiten Empfänger 4 vorgesehen. Mit anderen Worten wird ein Frequenzband linkszirkular bzw. rechtszirkular polarisiert abgesendet, während das andere Frequenzband rechtszirkular bzw. linkszirkular abgesendet wird.

Gemäß dem vorliegend beschriebenen Ausführungsbeispiel werden das erste polarisierte Frequenzband und das zweite polarisierte Frequenzband in einem Zirkular-Polarisator 7 zusammengeführt, der am Eingang einer zirkularpolarisierten Antenne, insbesondere am Eingang zum Erregerhorn einer Reflektorantenne 8, vorgesehen ist.

Wie vorab ausgeführt, nutzt die Erfindung nutzt die Eigenschaft von künstlichen Zielen wie Gebäuden, Fahrzeugen oder Schiffen aus, die zirkulare Wellen in Amplitude und Phase gleichermaßen zurücksenden, unabhängig davon, ob es sich um rechtszirkulare oder linkszirkulare Wellen handelt. Dies gilt ebenso für die Drehung der Polarisationsrichtung. Dadurch wird es ermöglicht, die nötige Bandbreite auf zwei unterschiedliche Polarisationen, rechtszirkular und linkszirkular, aufzuteilen, durch unterschiedliche Leistungsverstärker, bspw. Sender, zu führen, über eine gemeinsame Antenne zu leiten, im Empfänger in der Summe der Bandbreiten gemeinsam zu verarbeiten. Somit ist eine Verbesserung der Auflösung in Entfernungsrichtung erreichbar, wobei dennoch im Anschluss daran innerhalb der Azimutkompression die volle benötigte Auflösung in Flugrichtung prozessierbar ist.

Diese gleichen Reflexionseigenschaften eines Ziels, die es erlauben rechtszirkular erzeugte Echos mit linkszirkular erzeugten Echos koherent zu kombinieren und dadurch zwei aneinanderstoßende Frequenzbänder zu einem gemeinsamen Echosignal mit der Summe der Bandbreiten der Einzelbänder zu kombinieren, um diese hohe Summenbandbreite dann im Rahmen einer Pulskompression in eine, in Bezug auf die Auflösung der Einzelbänder erhöhte Auflösung zu umzusetzen.

Die Reflexionsparameter linearer Polarisation an vorab genannten Zielen sind unterschiedlich, da eine lineare Sendepolarisation von parallelen linearen Strukturen reflektiert wird, nicht aber von senkrechten linearen Strukturen. Demgegenüber sind Kreuzpolarisationseffekte gleich und unabhängig davon, ob sie von einer senkrechten oder waagerechten Polarisation hervorgerufen werden.

Vorzugsweise wird für das vorab beschriebene Verhalten Zirkularpolarisation verwendet. Ferner kann die Bandkombination auch mit linearer Polarisation ausgeführt werden, da mathematisch gesehen beide Polarisationen identisch sind und ineinander umgerechnet werden können. Im Fall der Verwendung von linearer Polarisation ist es notwendig, in jedem Frequenzbereich beide Polarisationsrichtungen zu empfangen und wenn möglich auch zu senden, da sonst die mathematische Umrechnung vor Überlagerung der beiden Frequenzbänder nicht mit der notwendigen Genauigkeit erfolgen kann.

Sofern keine Unterscheidung zwischen Kopolarisation und Kreuzpolarisation gefordert ist, können beide Frequenzbänder gleichzeitig gesendet werden. Dies hat den Vorteil, dass eine tiefstmögliche Pulswiederholfrequenz wählbar ist, so dass eine maximale Streifenbreite erreicht wird.

Beim Empfang von Echos bzw. insbesondere Reflexionen flächenhafter Zielstrukturen ist der Reflexionsfaktor zeitlich konstant und die Drehung des Polarisationsvektors erzeugt keine unterschiedlichen Phasen im Empfangssignal. Die beiden Frequenzbänder ergeben zusammen die Auflösung.

Bei der Reflexion an einem schmalen Linienziel, z.B. an einem Lüftungsgitter eines Fahrzeugs oder an einem Eisenzaun, wird das einfallende Sendesignal bzw. Frequenzband in eine Kopolar- und eine Kreuzkopolarkomponente geteilt. In diesem Fall überlagert eine Amplitudenmodulation das Empfangssignal, welches nur eine dieser Komponenten enthält und dessen Phase von der Ausrichtung des Linienreflektors abhängt.

Wie aus Figur 1 ersichtlich, können Linearpolarisationsaufnahmen über eine Phasenkorrektur bei der Bandkombination und darauf folgenden SAR-Prozessierungen, in einer Einrichtung zur SAR-Prozessierung 9, mit verschiedenen Phasenkombinationen simuliert und im Bild dargestellt werden, wobei insbesondere mindestens zwei SAR-Prozessierungen durchgeführt werden.

Ferner kann, wie aus Figur 2 ersichtlich, das erste polarisierte Frequenzband in einer ersten Einrichtung zur Phasenkorrektur 10 phasenkorrigiert und das zweite polarisierte Frequenzband in einer zweiten Einrichtung zur Phasenkorrektur 11 phasenkorrigiert. Die Phasenkorrektur kann mit oder ohne Einbeziehung der Kreuzpolarisationskomponente geschehen.

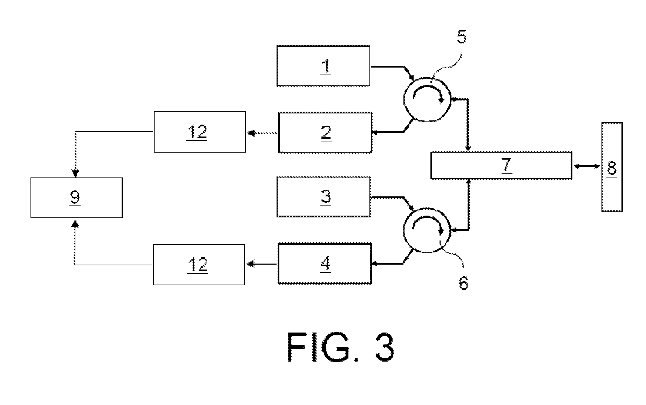

Sofern auch die Kreuzpolarisationskomponente ermittelt werden soll, kann die Pulswiederholfrequenz verdoppelt werden und die Frequenzbänder werden abwechselnd gesendet, wie aus Figur 3 ersichtlich. In diesem Fall wird jeweils die Phasenkorrektur für das erste und das zweite polarisierte Frequenzband 12 durchgeführt.

Die Kreuzpolarisationskomponente bei Zirkularpolarisation enthält die Anteile von Linienreflektoren sowie von Doppelreflexionen, da bei der Reflexion jeweils die Rotationsrichtung von zirkularpolarisierten Signalen umgedreht wird. Dieses Merkmal trägt zur Identifikation von z.B. Schiffen, Fahrzeugen oder stehenden Flugzeugen bei.

## Patentansprüche

1. Radargerät mit synthetischer Apertur, mit
einer ersten Sende- und Empfangseinheit zum Senden und zum Empfangen eines ersten Frequenzbandes und
einer zweiten Sende- und Empfangseinheit zum Senden und zum Empfangen eines zweiten Frequenzbandes,
**dadurch gekennzeichnet, dass**
das erste Frequenzband und das zweite Frequenzband jeweils als polarisiertes Frequenzband vorgesehen sind und
eine polarisierte Antenneneinheit zum Zusammenführen des ersten polarisierten Frequenzbandes und des zweiten polarisierten Frequenzbandes vorgesehen ist.

2. Radargerät nach Anspruch 1, **dadurch gekennzeichnet, dass** beide Sende- und Empfangseinheiten je einen Sender (1, 3) zum Senden des jeweiligen polarisierten Frequenzbandes, je einen Empfänger (2, 4) zum Empfangen des jeweiligen polarisierten Frequenzbandes sowie je einem Zirkulator (5, 6) zum Umschalten des jeweiligen polarisierten Frequenzbandes zwischen dem Sender (1,3) und dem Empfänger (2, 4) aufweisen.

3. Radargerät nach Anspruch 1 oder 2, **dadurch gekennzeichnet, dass** die erste Sende- und Empfangseinheit derart ausgestaltet ist, dass das erste polarisierte Frequenzband linkszirkular bzw. rechtszirkular gesendet wird und die zweite Sende- und Empfangseinheit derart ausgestaltet ist, dass das zweite polarisierte Frequenzband rechtszirkular bzw. linkszirkular gesendet wird.

4. Radargerät nach Anspruch 3, **dadurch gekennzeichnet, dass** die polarisierte Antenneneinheit als zirkularpolarisierte Antenne ausgeführt ist.

5. Radargerät nach Anspruch 3, **dadurch gekennzeichnet, dass** die polarisierte Antenneneinheit als Reflektorantenne (8) mit einem Zirkular-Polarisator (7) ausgeführt ist, wobei die Reflektorantenne (8) ein Erregerhorn aufweist und der Zirkular-Polarisator (7) am Eingang zum Erregerhorn angeordnet ist.

6. Radargerät nach Anspruch 3, **dadurch gekennzeichnet, dass** die polarisierte Antenneneinheit als Phased-Array-Antenne mit einem zirkularpolarisiertem Strahlerelement ausgeführt ist.

7. Radargerät nach Anspruch 2 bis 6, **dadurch gekennzeichnet, dass** vor dem Empfänger (2, 4) ein Eingangsfilter zur Filterung von Signalanteilen des jeweils anderen Frequenzbandes vorgesehen ist.

8. Radargerät nach Anspruch 7, **dadurch gekennzeichnet, dass** vor dem Empfänger (2, 4) ein steilflankiger Filter zur Zerlegung des jeweiligen polarisierten Frequenzbandes in weitere polarisierte Frequenzbänder vorgesehen ist.

9. Radargerät nach Anspruch 2 bis 8, **dadurch gekennzeichnet, dass** eine Einrichtung zur Phasenkorrektur (10, 11) des empfangenen polarisierten Frequenzbandes vorgesehen ist und eine Einrichtung zur SAR-Prozessierung (9) des phasenkorrigierten polarisierten Frequenzbandes vorgesehen ist.

10. Verfahren zum Betrieb eines Radargeräts mit synthetischer Apertur, wobei
ein erstes Frequenzband gesendet und empfangen wird und
ein zweites Frequenzband gesendet und empfangen wird,
**dadurch gekennzeichnet, dass**
das erste Frequenzband und das zweite Frequenzband jeweils polarisiert gesendet und/oder empfangen werden und
die empfangenen Echos des ersten polarisierten Frequenzbandes und des zweiten polarisierten Frequenzbandes kombiniert werden.

11. Verfahren nach Anspruch 10, **dadurch gekennzeichnet, das** erste polarisierte Frequenzband linkszirkular bzw. rechtszirkular gesendet wird und das zweite polarisierte Frequenzband rechtszirkular bzw. linkszirkular gesendet wird.

12. Verfahren nach Anspruch 10 bis 11, **dadurch gekennzeichnet, dass** vor dem Empfangen des einen polarisierten Frequenzbandes Signalanteile des jeweils anderen polarisierten Frequenzbandes gefiltert werden.

13. Verfahren nach Anspruch 12, **dadurch gekennzeichnet, dass** vor dem Empfangen das jeweilige polarisierte Frequenzband in weitere polarisierte Frequenzbänder zerlegt wird.

14. Verfahren nach Anspruch 10 bis 13, **dadurch gekennzeichnet, dass** die empfangenen Echos des ersten polarisierten Frequenzbandes und des zweiten polarisierten Frequenzbandes in einem SAR-Prozessing kombiniert werden, dass die Echos von Zielen, die sich für beide Polarisationen leistungs- und phasenmäßig gleich oder ähnlich verhalten, eine Auflösung ergeben, die aus der Summenbandbreite der beiden polarisierten Frequenzbänder resultiert.

15. Verfahren nach Anspruch 14, **dadurch gekennzeichnet, dass** die Kombination der empfangen Echos derart erfolgt, dass das Ergebnis in Bildern mit zwei oder mehr unterschiedlichen Linearkombinationen darstellbar ist.

16. Verfahren nach Anspruch 11 bis 15, **dadurch gekennzeichnet, dass** die polarisierten Frequenzbänder sequenziell abwechselnd gesendet werden, der Empfang in der Summenbandbreite der polarisierten Frequenzbänder erfolgt und die Kombination der empfangen Echos polarimetrisch auswertbar ist.
